# EUROPEAN PATENT SPECIFICATION

(11) **EP 4 187 943 B1**
(45) Date of publication and mention of the grant of the patent: **25.03.2026**
(21) Application number: 21211195.9
(22) Date of filing: 30.11.2021
(51) Int. Cl.: H04W 4/40, H04W 4/48

(54) **METHOD, COMPUTER PROGRAM, APPARATUS AND VEHICLE FOR CONTROLLING WIRELESS ACCESS**
VERFAHREN, COMPUTERPROGRAMM, VORRICHTUNG UND FAHRZEUG ZUR STEUERUNG VON DRAHTLOSEM ZUGRIFF
PROCÉDÉ, PROGRAMME INFORMATIQUE, APPAREIL ET VÉHICULE DE CONTRÔLE D'ACCÈS SANS FIL

(43) Date of publication of application: 31.05.2023
(73) Proprietor: Bayerische Motoren Werke Aktiengesellschaft, 80809 München (DE)
(72) Inventor: Neff, Albrecht, Sunnyvale, CA 94087 (US); Bronzi, Walter, Mountain View, CA 94043 (US)

(56) References cited:
- US-A1- 2013 035 083
- US-A1- 2021 114 616

## Description

The present disclosure relates to the field of vehicular communication. More specifically to a method, a computer program, an apparatus and a vehicle for controlling wireless access of a plurality of communication devices in a vehicle, more particularly, but not exclusively, to a concept for managing wireless access resources for and among communication devices in a vehicle.

Vehicular communication is on the rise. As wireless data communication has been introduced, vehicles provide more on more services to users and passengers that rely on wireless communication between the vehicle and wireless networks, e.g. cellular networks of different operators or between the vehicle and wireless devices within the car. For example, features of advanced driver assistance systems (ADAS) might require wirelessly transmitted data from backend systems. Another example is that newer services provide options to use projection mode or projected mode, which offers using a vehicle's human machine interface (hmi) for services offered by a user device, e.g. a smart phone or handheld device. A user may then use the vehicle's resources, e.g. display, audio system and input devices, to interact with an application that is actually executed on the user's device.

Other services that may be provided in a vehicle are entertainment services for the passengers, e.g. replay of audio and video content, conversational services and data services such as internet access, emailing, social networking, chat, etc.

The variety of services is steadily increasing. At the same time access technologies are further developed and the number of different access technologies or access options is also increasing. Further complexity is added by the fact, that wireless communication is by its nature subject to varying available bandwidth.

Document US 2021/0114616 A1 discloses a vehicular communication bonding unit, which creates a bonded wireless communication connection that transports data-packets of a source data-stream from a remote server to a vehicular transceiver, by transporting the data-packets over at least two wireless communication links. The vehicular communication bonding unit utilizes a vehicular cellular transceiver to receive a first batch of the data-packets over a first cellular communication link that connects between the vehicular cellular transceiver and the remote server. The vehicular communication bonding unit further utilizes at least one end-user device, of an occupant of a vehicle,
to receive a second batch of the data-packets of the particular data-stream, over a second cellular communication link that connects between the end-user device and the remote server.

There may be a demand for an improved concept for managing wireless access in a vehicle.

This demand may be satisfied by the subject-matter of the appended independent and dependent claims.

Embodiments are based on the finding that the services used in the car may have different significances for a driver or the vehicle. For example, entertainment services provided to the rear passenger seats do not have the same significance as a service using projected mode and/or a service, which is relevant for the driver of the vehicle. It is a finding that some managing needs to be in place in case of resource shortage, e.g. if a data rate that can be provided by the communication or relaying unit of the vehicle falls short on the overall data demand of the communication devices in the vehicle.

Embodiments provide a method for controlling wireless access of a plurality of communication devices in a vehicle. The method comprises determining information on a predicted future demand for wireless communication resources of the plurality of communication devices and determining information on a predicted future availability of wireless communication resources in the vehicle. The method further comprises managing the wireless communication resources for the plurality of communication devices in the vehicle based on the information on the predicted future demand and based on the information on the predicted future availability. Embodiments enable management and/or control of communication resources in a vehicle, e.g. more relevant data can be prioritized.

The managing comprises assigning different radio bands (e.g. Wi-Fi) to the communication devices. Radio band utilization may be controlled and managed as an efficient means for communication resource management in vehicles. Furthermore, the managing may comprise assigning different radio access technologies to the communication devices. Like radio band utilization, radio access technology utilization may be controlled and managed as an efficient means for communication resource management in a vehicle.

In further embodiments the managing may comprise determining service priorities for services of the communication devices. The managing comprises determining device priorities for the communication devices. Embodiments may enable efficient communication resource management in a vehicle using a priority scheme for services and/or devices. For example, the service priorities may comprise at least one lower priority for an entertainment service and at least one higher priority for a driver-relevant service. The device priorities may comprise at least one lower priority for a device providing an entertainment service and at least one higher priority for a device proving a driver-relevant service. Embodiments may hence enable prioritization of driver-relevant services and/or devices.

Moreover, the managing may comprise using a dedicated radio band for a service and/or a device with a higher priority and one or more other radio bands for a service and/or a device with a lower priority. Radio bands may be used to enable efficient communication resource control and management for a vehicle. Likewise, the managing may comprise using a dedicated radio access technology for a service and/or a device with a higher priority and one or more other radio access technologies for a service and/or device with a lower priority.

In further embodiments the determining of the information on the predicted future demand may comprise predicting a future radio resource demand of a service and/or device based on one or more elements of the group of a location of the vehicle, historical data of the vehicle, service user and/or communication device, statistical data of the vehicle, service user and/or communication device, information from the vehicle, service user and/or communication device, measurements, and information from other vehicles and/or other communication devices. These elements may provide a solid basis for predicting a future demand.

The determining of the information on the predicted future availability of wireless communication resources may comprise predicting a future availability of radio resources based on one or more elements of the group of a location of the vehicle, a route of the vehicle, historical data of the vehicle, service user and/or communication device, statistical data of the vehicle, service user and/or communication device, information from the vehicle, service user and/or communication device, measurements, information from a wireless access system, and information from other vehicles and/or other communication devices. These elements may provide a solid basis for predicting a future availability of communication resources.

For example, the managing may comprise limiting a data rate of a service and/or device with a lower priority compared to a service and/or device with a higher priority. Data rate limitation may be an effective means to manage radio or communication resources. The limiting may comprise limiting the data rate of a communication device. In some embodiments, e.g. in case of shortage of data capacity of wireless communications, the data rate of one or more devices may be limited compared to others, e.g. devices of a rear seat of the vehicle may be restricted. For example, the limiting of the data rate of the communication device comprises limiting the data rate for one of or a combination of one or more medium access control addresses, one or more internet protocol addresses, and/or one or more protocol ports of the communication device or its communication partner(s). Using such addresses for data rate limitations may enable an efficient implementation for limitation mechanisms.

The limiting can also include temporarily stopping (or not offering) services provided by the car (e.g. built-in entertainment services like video streaming) or by reconfiguring those services to (temporarily) consume less data.

Another embodiment is a computer program having a program code for performing one of the methods described herein, when the computer program is executed on a computer, a processor, or a programmable hardware component.

An apparatus for a vehicle comprising a control unit for performing one of the methods described herein is another embodiment. Yet another embodiment is a vehicle comprising an embodiment of such an apparatus.

Some examples of apparatuses, methods and/or computer programs will be described in the following by way of example only, and with reference to the accompanying figures, in which
Fig. 1 shows a block diagram of a method for controlling wireless access of a plurality of communication devices in a vehicle; and
Fig. 2 shows an embodiment of an apparatus and an embodiment of a vehicle.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed, or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention which is only defined by the appended claims. Like numbers refer to like or similar elements throughout the description of the figures.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes", or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

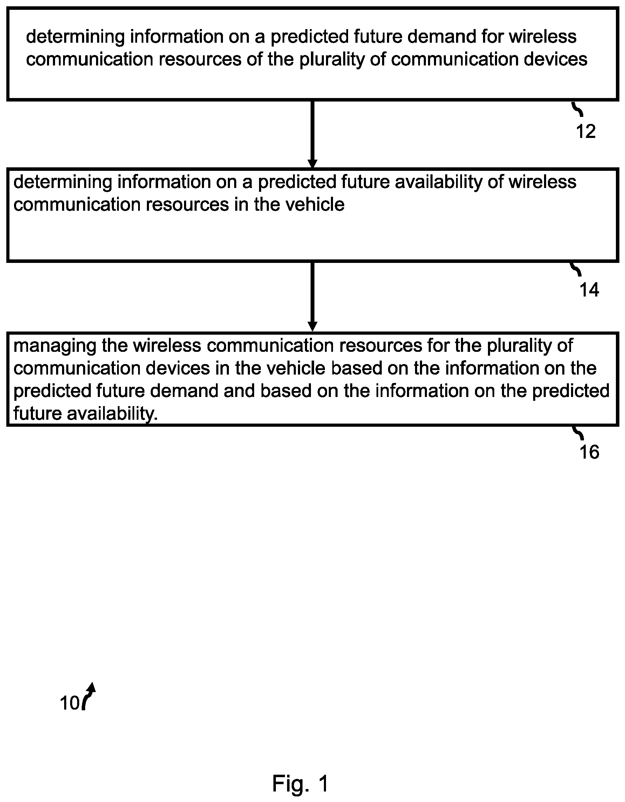

Fig. 1 shows a block diagram of a method 10 for controlling wireless access of a plurality of communication devices in a vehicle. The method 10 comprises determining 12 information on a predicted future demand for wireless communication resources of the plurality of communication devices. The method 10 further comprises determining 14 information on a predicted future availability of wireless communication resources in the vehicle. The method 10 also comprises managing 16 the wireless communication resources for the plurality of communication devices in the vehicle based on the information on the predicted future demand and based on the information on the predicted future availability.

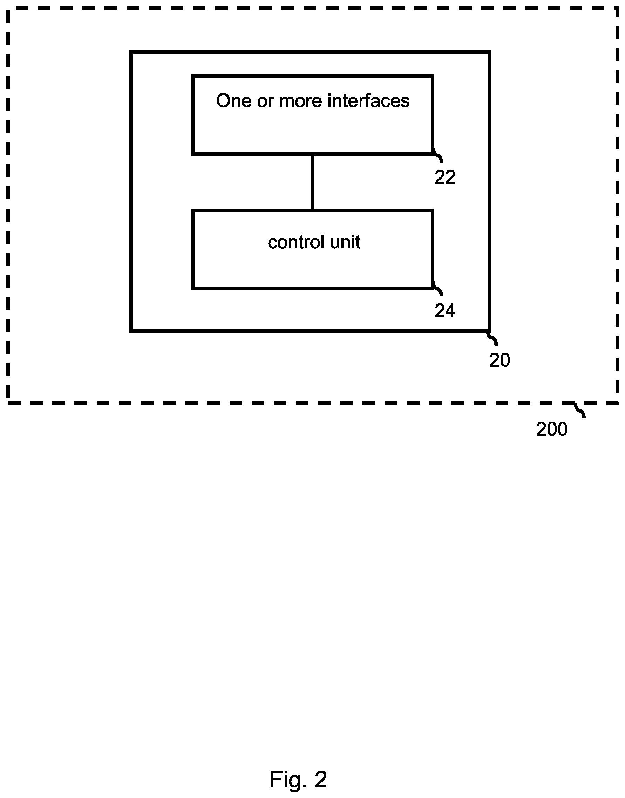

Fig. 2 shows an embodiment of an apparatus 20 and an embodiment of a vehicle 200. The apparatus 20 for the vehicle 200 comprises one or more interfaces 22 for communicating in a communication network and the apparatus 20 comprises a control unit 24, which is coupled with the one or more interfaces 22, and which is configured to perform one of the methods described herein. Another embodiment (shown in dotted lines as it is optional from the perspective of the apparatus 20) is a vehicle 200 comprising an embodiment of the apparatus 20.

The one or more interfaces 22 may correspond to one or more inputs and/or outputs for receiving and/or transmitting information, which may be in digital (bit) values according to a specified code, within a module, between modules or between modules of different entities. For example, an interface 22 may comprise interface circuitry configured to receive and/or transmit information. In embodiments an interface 22, may correspond to any means for obtaining, receiving, transmitting or providing analog or digital signals or information, e.g. any connector, contact, pin, register, input port, output port, conductor, lane, etc., which allows providing or obtaining a signal or information. An interface 22 may be configured to communicate (transmit, receive, or both) in a wireless or wireline manner and it may be configured to communicate, i.e. transmit and/or receive signals, information with further internal or external components. The one or more interfaces 22 may comprise further components to enable according communication in a mobile communication system, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

The one or more interfaces 22 may be coupled to one or more antennas, which may correspond to any transmit and/or receive antennas, such as horn antennas, dipole antennas, patch antennas, sector antennas etc. The antennas may be arranged in a defined geometrical setting, such as a uniform array, a linear array, a circular array, a triangular array, a uniform field antenna, a field array, combinations thereof, etc. In some examples the one or more interfaces 22 may serve the purpose of transmitting or receiving or both, transmitting and receiving, information.

The control unit 24 may be implemented using one or more processing units, one or more processing devices, any means for processing, such as a processor, a computer or a programmable hardware component being operable with accordingly adapted software. In other words, the described function of the control/processing unit 24 may as well be implemented in software, which is then executed on one or more programmable hardware components. Such hardware components may comprise a general-purpose processor, a Digital Signal Processor (DSP), a micro-controller, etc.

For example, the apparatus 20 may be comprised in a transceiver or communication unit of the vehicle 200, which relays data between wireless communication networks, e.g. cellular or vehicular communication networks, and the communication devices in the vehicle. The transceiver or communication unit may hence serve as a base station, a relay station or a mobile device of a mobile communication system. A base station or base station transceiver can be operable to communicate with one or more active mobile transceivers and a base station transceiver can be located in or adjacent to a coverage area of another base station transceiver, e.g., a macro cell base station transceiver or small cell base station transceiver. Hence, embodiments may provide a mobile communication system comprising one or more mobile transceivers and one or more base station transceivers, wherein the base station transceivers may establish macro cells or small cells, as e.g., pico-, metro-, or femto cells. A mobile transceiver may correspond to a smartphone, a cell phone, user equipment, radio equipment, a mobile, a mobile station, a laptop, a notebook, a personal computer, a Personal Digital Assistant (PDA), a Universal Serial Bus (USB) -stick, a vehicle, a car, a mobile relay transceiver for D2D communication, etc. A mobile transceiver may also be referred to as User Equipment (UE) or mobile in line with the 3GPP (Third Generation Partnership Project) terminology. Hence, the above communication devices in the vehicle may comprise a mobile transceiver or a communication unit, which use wired communication inside the vehicle. An example for such a communication device may be a rear seat entertainment system with audio and/or video output. Such communication devices may use a wired communication link to the transceiver or communication unit of the vehicle.

A vehicle 200 may correspond to any conceivable means for transportation, e.g. a car, a bike, a motorbike, a van, a truck, a bus, a ship, a boat, a plane, a train, a tram, etc.

There could be use-cases, where the connection in the car or vehicle itself is wired but externally it is wireless (e.g. 5G). So, management of wireless resources may be involved, but the controlling could actually be also on wired connections in the car/vehicle to lower use of external wireless connections.

### Example:

1) Wireless devices (smartphones) in the car connected to a Wi-Fi hotspot offered by the car: Management of the car internal wireless connections by managing the wireless connection between smartphones and vehicle hotspot.
2) Wired device as part of the vehicle internal network (e.g. Rear seat entertainment) connected to the cellular communication device of the car (e.g Telematic unit) which is connected via wireless cellular connection: Management of the car external wireless connection by managing the wired connection in between vehicle internal devices.

A base station transceiver or communication unit in the vehicle may correspond to a remote radio head, a transmission point, an access point, radio equipment, a small cell, a micro cell, a femto cell, a metro cell etc. A base station transceiver may correspond to a base station understood as a logical concept of a node/entity terminating a radio bearer or connectivity over the air interface between a terminal/mobile transceiver and a radio access network. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a Base Transceiver Station (BTS), an access point, a remote radio head, a transmission point, a relay transceiver etc., which may be further subdivided in a remote unit and a central unit.

A mobile transceiver can be associated, camped on, or registered with a base station transceiver or cell. The term cell refers to a coverage area of radio services provided by a base station transceiver, e.g., a NodeB (NB), an eNodeB (eNB), a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. The apparatus 20 may be a mobile transceiver from the perspective of an overlaying network and it may additionally serve as a base station transceiver from the perspective of wireless communication devices inside the vehicle. It may additionally serve as wireless modem or gateway for wired communication inside the vehicle.

The mobile communication system may, for example, correspond to one of the Third Generation Partnership Project (3GPP)-standardized mobile communication networks, where the term mobile communication system is used synonymously to mobile communication network. The mobile or wireless communication system, which may also include satellite communication and/or data connection systems, may correspond to a mobile communication system of the 5th Generation (5G) and/or 6th Generation (6G) and may use mm-Wave technology. The mobile communication system may correspond to or comprise, for example, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Time-Frequency and Space (OTFS) system, an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

At least in some embodiments projected modes of communication devices may be used in a vehicle. In general, there can be a plurality of connectivity use-cases in a car or vehicle, some may be just for infotainment, but some may also be for driving related features. Embodiments may enable prioritization of wireless bandwidth/communication resources. For example, standard QoS (Quality of Service) mechanisms for data networks for traffic prioritization may be used but for services or devices served in a vehicle. There may be a mixture of critical and entertainment-like use-cases in the car's/vehicle's wireless networks (e.g. WiFi (wireless fidelity), Bluetooth, cellular, etc.). Moreover, there may be limited and changing bandwidth available at the car's/vehicle's wireless networks/WiFi, for example, because of interferences with other WiFi networks, or wireless nodes in the surrounding. In general, from a vehicle's perspective, bandwidth is not stable and depends on external factors, such as the surrounding, fading, shadowing, Doppler-shifts, network loads, etc.

Embodiments may enable mechanisms to differentiate between critical and/or driving-relevant and other more entertainment-oriented traffic and/or use-cases. In embodiments a communication situation or scenario may be evaluated, e.g. with respect to wireless networks and bandwidth, taken into account internal and external factors. Internal factors may be the number of projected mode devices and the number of other devices, e.g. one projected mode device and three other devices with video streaming connected. External factors may comprise the number of other networks in a surrounding of the vehicle, e.g. 20 other WiFis around in New York. Embodiments may prioritize critical traffic on different levels (e.g. physical level).

The car or vehicle, typically the device operating a "projected mode" or a critical application, typically the head/communication unit, knows which devices are connected currently for critical use-cases like projected modes. For example, the car or vehicle, its head/communication unit respectively, knows the MAC (medium access control) addresses, IP (internet protocol)-addresses, used network ports or any other information that could be used to uniquely identify communication endpoints for the project-mode use cases of the devices that are connected currently for projected modes. This information can be used to prioritize this traffic as laid out in more detail in the sequel.

Typically, the head/communication unit knows this information and could give it to a "central wireless coordinator" (CWC), as an embodiment of the apparatus 20, in the car/vehicle to do the traffic prioritization, e.g. to provide commands to in car WiFi hotspots and other wireless nodes (e.g. also Bluetooth) in the car. Also, the networking components (like a wireless node or a WiFi hotspot) can transmit connectivity related information to the CWC (like current wireless bandwidth; other wireless networks in the surrounding, etc.).

The CWC may receive other information like location and positioning information (details below), that could also be relevant for coordination of connectivity. The CWC may receive further information like information about bandwidth usage and need, like the current and prospective required bandwidth of the critical use-cases, e.g. bandwidth needed by projected mode use-cases. The wireless nodes of the car or vehicles should be recipient of commands of this CWC regarding connectivity prioritization, with functionality as outlined below.

The head/communication unit device of a car/vehicle may comprise the CWC, e.g. an embodiment of the apparatus 20. In some embodiments a bandwidth shortage may be predicted as good as possible, so that no actual communication interruption for the critical WiFi use-cases occurs.

For example, prediction may work as follows:
- Location based,
- predefined for specific locations,
- crowd learned,
- learned for this specific car/vehicle/user,
- by generic location: toll collector electronics on the highway, airports, downtown big cities, etc., and
- Observation of available bandwidth with prediction (extrapolation, machine learning).

Hence, in embodiments the determining 14 of the information on the predicted future availability of wireless communication resources may comprise predicting a future availability of radio resources based on one or more elements of the group of a location of the vehicle, a route of the vehicle, historical data of the vehicle, historical data of the service user and/or historical data of the communication device, statistical data of the vehicle, statistical data of the service user and/or statistical data of the communication device, information from the vehicle, information from the service user and/or information from the communication device, measurements, information from a wireless access system, and information from other vehicles, from other users, from other devices, and/or other communication devices. For example, also information on a proximity to generic landmarks like "always in the proximity of radio towers" or "in tunnel" may be used for the prediction. In general, historical, statistical or current data may be used for prediction in embodiments for the future bandwidth demand as well as for the future bandwidth availability.

In other words, at least in some embodiments statistical data may be recorded, stored, and used for future prediction. For example, if a vehicle approaches a tunnel it may know from the past whether there are radio services available in the tunnel or not. Such information may also be available from other vehicles or from statistical data of a communication device. If it is known, that with the given traffic situation there is going to be a reduction/drop in data rate for a certain amount of time, video buffers for rear seat entertainment can be filled in advance, so no data rate has to be consumed by the rear seat entertainment in the tunnel. The apparatus may then reduce the data rate for these services in the tunnel and prioritize other services.

Furthermore, as a second measure, information on a current or prospective required bandwidth of the critical applications may be determined and be matched with the current or prospective available bandwidth as mentioned above.

For example, critical applications (like projected mode software modules) may report bandwidth need to the CWC, which may depend on activated features. Current (or maximum or prospective) bandwidth needs of the critical applications can be aggregated using this information.

Hence, in embodiments, the determining 12 of the information on the current and/or predicted future demand may comprise predicting a future radio resource demand of a service based on one or more elements of the group of a location of the vehicle, historical data of the vehicle, historical data of the service user and/or historical data of the communication device, statistical data of the vehicle, statistical data of the service user and/or statistical data of the communication device, information from the vehicle, from the service user and/or from the communication device, measurements, and information from other vehicles, from other users, from other devices, and/or other communication devices. For examples, features activated on the devices may be used to predict the future radio resource demand, (e.g. in case of projected modes and infotainment features like watching video). Knowledge on where, when and by whom specific features with their typical or maximum required data rates are activated can be used for predicting the future demand, e.g. historical data, statistical data, by location, user data or preferences, time, crowd, etc. In general, historical, statistical or current data may be used for prediction in embodiments for the future bandwidth demand as well as for the future bandwidth availability.

For example, statistical data on services and/or devices may be recorded, stored, and/or exploited. Lookup tables may be predetermined that list typical and maximum bandwidth depending on activation state and activated features/services. In some embodiments, independent of (or also in addition to) the above-mentioned evaluation of available and required bandwidth, a setting can be provided for a user to select a "pessimistic" traffic prioritization, so to avoid interruptions of critical wireless applications as good as possible. Embodiments may enable a predefined/manually activatable setting for a user, e.g. to preset to activate certain of the below mentioned measures by default. For example, put entertainment on 2.4GHz band and activate more aggressive bandwidth limiting. Hence, in embodiments the managing 16 may comprise assigning different radio bands to the communication devices and/or services. The managing 16 may further comprise assigning different radio access technologies to the communication devices. For example, some devices and/or services may be assigned to a 4G network and other may be assigned to a 5G network, some may use a cellular network, others may use a vehicular network.

Moreover, the managing 16 may comprise determining service priorities for services of the communication devices and/or determining device priorities for the communication devices. For example, "rear seat"-services may be assigned a lower priority than front seat or projected mode service and/or devices. The service priorities may comprise at least one lower priority for an entertainment service and at least one higher priority for a driver-relevant service. Additionally or alternatively, the device priorities may comprise at least one lower priority for a device providing an entertainment service and at least one higher priority for a device proving a driver-relevant service.

For example, devices typically running important services are advanced driver assistance electronic control units (ADAS ECUs) or a smartphone that is currently connected to a head-unit of the vehicle as projected mode smartphone. Devices typically running unimportant services are, for example, rear seat entertainment and all user devices like smartphones that are not connected as projected mode. Devices with mixed criticality are, for example, a head-unit with an accident report in a map and with an audio streaming app.

There are different options on how to prioritize the critical traffic in embodiments on different levels, e.g. on application level, on physical level, etc. In general, the managing 16 may comprise limiting a data rate of a service and/or device with a lower priority compared to a service and/or device with a higher priority. The limiting may include a reconfiguration of a service (e.g. to a lower video quality in case of scalable video) or just capping the provided data rate.

For example, the limiting may comprise limiting the data rate of a communication device. Such a limiting may be achieved, for example, by limiting the data rate for one of or a combination of one or more medium access control (MAC) addresses, one or more internet protocol (IP) addresses, and/or one or more protocol ports of the communication device or its communication partner(s). The limiting could, for example, affect also IP addresses of communication partners of the communication device and not IP addresses of the communication device itself. In embodiments, source addresses, target addresses, or combination thereof may be used to limit data rates of data streams.

Also, a role of the device may be taken into account for limiting a data rate (e.g. device providing currently the projected mode versus device in the role of a video player). Depending on who is driving the same device can be in different roles. The car/vehicle knows, which device is in which role and can then determine the IP or MAC address or port also based on this information.

For example, prioritization on a physical level (layer 1) may be used. In some embodiments this may be achieved by prohibiting WiFi connections to in-car WiFi hotspots of devices that are not involved in critical applications (with the WiFi hotspot of the car) or disconnect the devices in cases of low bandwidth resources. The critical devices could be the devices that are involved in project modes (it is known by the vehicle, which device and MAC address (or other information used to identify devices) is currently connected for projected modes).

In some embodiments band steering may be used. Before prohibiting WiFi connections altogether, the connection of unimportant devices can be limited to a certain frequency band, for example, entertainment related devices are "band steered" from 5GHz towards 2.4GHz, from 6GHz towards 5Ghz. or in general to and from any wireless frequency band. Some embodiments may "Invite" entertainment related devices to move from 5GHz to 2.4GHz (or between any other bands), for example by using features of the 802.11e/k/v/r standards (e.g. BSS (base service set) management frames). There is a grace period: If a device does not move to 2.4 GHz (or any other particular band) then it is blacklisted (its access may be denied) for 5Ghz (or any other respective band). Bands might not only statically be assigned but also be assigned or changed on-demand.

In further embodiments a frequency band may be reserved for critical use-cases (e.g. a car or vehicle uses two or more networks per frequency band, and one is reserved for critical applications). Hence, in embodiments the managing 16 may comprise using a dedicated radio band for a service and/or a device with a higher priority and one or more other radio bands for a service and/or device with a lower priority.

For example, the managing 16 comprises using a dedicated radio access technology (RAT) for a service and/or device with a higher priority and one or more other radio access technologies for a service with a lower priority. Hence, in some embodiments a first RAT, e.g. a 3GPP 5G femto cell in a vehicle, may be used for critical services and a second RAT, e.g. a IEEE 802.11 variant provided in a vehicle, may be used for non-critical service. As traffic from both RATs can be distinguished by the communication unit/apparatus 20 in the car, according management and limitations can be applied on a per RAT basis. Hence, RATs might not only be statically assigned but may be assigned or changed on demand. In some scenarios access may even be denied completely in order to conserve bandwidth for critical devices or services.

Furthermore, if the car has multiple WiFi hotspots or WiFi nodes or other wireless connectivity nodes (like Bluetooth), unimportant wireless nodes (or services of nodes) of the car/vehicle may be temporarily shut down to reduce interference. Or devices may be hand-overed to secondary WiFi hotspots of the car.

Additionally or alternatively, embodiments may use prioritization on data or MAC layer (layer 2). This may be carried out per source device, e.g. a bandwidth may be limited per device on a data layer per MAC address (or any other information used to identify devices). Another option is a limitation per traffic destination. For example, bandwidth limiting may be done per destination. For example, embodiments may prioritize a head-unit as traffic destination versus internet/wave/route to external communication or in-car entertainment device as destination.

Yet another option is to use prioritization on transport layer (Layer 3). For example, bandwidth limiting per source IP / Port may be use and/or bandwidth limiting per destination IP/destination Port (projected mode may be identified by the destination IP/port).

Moreover, in-vehicle feedback may be utilized. The above-mentioned measures can be announced (or pre-announced via an option to accept or decline) as a user feedback via the vehicle UI (user interface) or speech assistant. So, users of unimportant use cases like video-streaming know that their devices will be disconnected (with possible interruption of their entertainment service) and might rely on their own (cellular) connections, depending on the measure above.

As already mentioned, in embodiments the respective methods may be implemented as computer programs or codes, which can be executed on a respective hardware. Hence, another embodiment is a computer program having a program code for performing at least one of the above methods, when the computer program is executed on a computer, a processor, or a programmable hardware component. A further embodiment is a (non-transitory) computer readable storage medium storing instructions which, when executed by a computer, processor, or programmable hardware component, cause the computer to implement one of the methods described herein.

A person of skill in the art would readily recognize that steps of various above-described methods can be performed by programmed computers, for example, positions of slots may be determined or calculated. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, Digital Signal Processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

It is further to be noted that methods disclosed in the specification or in the claims may be implemented by a device having means for performing each of the respective steps of these methods.

### References

- 10: method for controlling wireless access of a plurality of communication devices in a vehicle
- 12: determining information on a predicted future demand for wireless communication resources of the plurality of communication devices
- 14: determining information on a predicted future availability of wireless communication resources in the vehicle
- 16: managing the wireless communication resources for the plurality of communication devices in the vehicle based on the information on the predicted future demand and based on the information on the predicted future availability
- 20: Apparatus for a vehicle
- 22: one or more interfaces
- 24: control unit
- 200: vehicle

## Claims

1. Method (10) for controlling wireless access of a plurality of communication devices in a vehicle (200), the method comprising
determining (12) information on a predicted future demand for wireless communication resources of the plurality of communication devices;
determining (14) information on a predicted future availability of wireless communication resources in the vehicle; and
managing (16) the wireless communication resources for the plurality of communication devices in the vehicle based on the information on the predicted future demand and based on the information on the predicted future availability,
wherein the managing further comprises assigning different radio bands to the communication devices,
wherein the managing further comprises determining device priorities for the communication devices,
**characterized in that**
the managing of the wireless communication resources for the plurality of communication devices in the vehicle further comprises inviting a subset of the plurality of communication devices having a lower device priority to move from a first radio band to a second radio band; and
if a device in said subset of the plurality of communication devices does not move to the second radio band within a grace period after the invitation: blacklisting said device for access to the first radio band.

2. The method (10) of claim 1, wherein the managing comprises assigning different radio access technologies to the communication devices.

3. The method (10) of one of the claims 1 or 2, wherein the managing comprises determining service priorities for services of the communication devices.

4. The method (10) of claim 3, wherein the service priorities comprise at least one lower priority for an entertainment service and at least one higher priority for a driver-relevant service and/or wherein the device priorities comprise at least one lower priority for a device providing an entertainment service and at least one higher priority for a device proving a driver-relevant service.

5. The method (10) of one of the claims 3 or 4, wherein the managing comprises using a dedicated radio access technology for a service with a higher priority and one or more other radio access technologies for a service with a lower priority.

6. The method (10) of one of the claims 1 to 5, wherein the determining of the information on the predicted future demand comprises predicting a future radio resource demand of a service based on one or more elements of the group of
a location of the vehicle,
historical data of the vehicle, service user and/or communication device,
statistical data of the vehicle, service user and/or communication device,
information from the vehicle, service user and/or communication device,
measurements, and
information from other vehicles and/or other communication devices.

7. The method (10) of one of the claims 1 to 6, wherein the determining of the information on the predicted future availability of wireless communication resources comprises predicting a future availability of radio resources based on one or more elements of the group of
a location of the vehicle,
a route of the vehicle,
historical data of the vehicle, service user and/or communication device,
statistical data of the vehicle, service user and/or communication device,
information from the vehicle, service user and/or communication device,
measurements,
information from a wireless access system, and
information from other vehicles and/or other communication devices.

8. The method (10) of one of the claims 1 to 7, wherein the managing comprises limiting a data rate of a service and/or device with a lower priority compared to a service and/or device with a higher priority.

9. The method (10) of claim 8, wherein the limiting comprises limiting the data rate of a communication device.

10. The method (10) of claim 9, wherein the limiting of the data rate of the communication device comprises limiting the data rate for one of or a combination of one or more medium access control addresses, one or more internet protocol addresses, and/or one or more protocol ports of the communication device or its communication partners.

11. A computer program having a program code for performing the methods (10) according to any one of claims 1 to 10, when the computer program is executed on a computer, a processor, or a programmable hardware component.

12. An apparatus (20) for a vehicle (200) comprising a control unit (24) configured to perform one of the methods (10) of one of the claims 1 to 10.

13. A vehicle (200) comprising the apparatus (20) of claim 12.

## Patentansprüche

1. Verfahren (10) zum Steuern des drahtlosen Zugangs einer Vielzahl von Kommunikationsvorrichtungen in einem Fahrzeug (200), wobei das Verfahren umfasst:
Bestimmen (12) von Informationen über einen vorhergesagten zukünftigen Bedarf an drahtlosen Kommunikationsressourcen der Vielzahl von Kommunikationsvorrichtungen;
Bestimmen (14) von Informationen über eine vorhergesagte zukünftige Verfügbarkeit von drahtlosen Kommunikationsressourcen in dem Fahrzeug; und
Verwalten (16) der drahtlosen Kommunikationsressourcen für die Vielzahl von Kommunikationsvorrichtungen in dem Fahrzeug auf der Grundlage der Informationen über den vorhergesagten zukünftigen Bedarf und auf der Grundlage der Informationen über die vorhergesagte zukünftige Verfügbarkeit,
wobei das Verwalten ferner das Zuweisen unterschiedlicher Funkbänder zu den Kommunikationsvorrichtungen umfasst,
wobei das Verwalten ferner das Bestimmen von Vorrichtungsprioritäten für die Kommunikationsvorrichtungen umfasst,
**dadurch gekennzeichnet, dass** das Verwalten der drahtlosen Kommunikationsressourcen für die Vielzahl von Kommunikationsvorrichtungen in dem Fahrzeug ferner das Einladen einer Teilmenge der Vielzahl von Kommunikationsvorrichtungen mit einer niedrigeren Vorrichtungspriorität umfasst, von einem ersten Funkband zu einem zweiten Funkband zu wechseln; und
falls eine Vorrichtung in der genannten Teilmenge der Vielzahl von
Kommunikationsvorrichtungen nicht innerhalb einer Schonfrist nach der Einladung zu dem zweiten Funkband wechselt: Aufnehmen der genannten Vorrichtung in eine schwarze Liste für den Zugang zu dem ersten Funkband.

2. Verfahren (10) nach Anspruch 1, wobei das Verwalten das Zuweisen unterschiedlicher Funkzugangstechnologien zu den Kommunikationsvorrichtungen umfasst.

3. Verfahren (10) nach einem der Ansprüche 1 oder 2, wobei das Verwalten das Bestimmen von Dienstprioritäten für Dienste der Kommunikationsvorrichtungen umfasst.

4. Verfahren (10) nach Anspruch 3, wobei die Dienstprioritäten mindestens eine niedrigere Priorität für einen Unterhaltungsdienst und mindestens eine höhere Priorität für einen fahrerrelevanten Dienst umfassen und/oder wobei die Vorrichtungsprioritäten mindestens eine niedrigere Priorität für eine Vorrichtung, die einen Unterhaltungsdienst bereitstellt, und mindestens eine höhere Priorität für eine Vorrichtung, die einen fahrerrelevanten Dienst bereitstellt, umfassen.

5. Verfahren (10) nach einem der Ansprüche 3 oder 4, wobei das Verwalten das Verwenden einer dedizierten Funkzugangstechnologie für einen Dienst mit einer höheren Priorität und einer oder mehrerer anderer Funkzugangstechnologien für einen Dienst mit einer niedrigeren Priorität umfasst.

6. Verfahren (10) nach einem der Ansprüche 1 bis 5, wobei das Bestimmen der Informationen über den vorhergesagten zukünftigen Bedarf das Vorhersagen eines zukünftigen Funkressourcenbedarfs eines Dienstes auf der Grundlage von einem oder mehreren Elementen der Gruppe umfasst, bestehend aus:
einem Standort des Fahrzeugs,
historischen Daten des Fahrzeugs, Dienstbenutzers und/oder der Kommunikationsvorrichtung,
statistischen Daten des Fahrzeugs, Dienstbenutzers und/oder der Kommunikationsvorrichtung,
Informationen von dem Fahrzeug, Dienstbenutzer und/oder der Kommunikationsvorrichtung,
Messungen, und
Informationen von anderen Fahrzeugen und/oder anderen Kommunikationsvorrichtungen.

7. Verfahren (10) nach einem der Ansprüche 1 bis 6, wobei das Bestimmen der Informationen über die vorhergesagte zukünftige Verfügbarkeit von drahtlosen Kommunikationsressourcen das Vorhersagen einer zukünftigen Verfügbarkeit von Funkressourcen auf der Grundlage von einem oder mehreren Elementen der Gruppe umfasst, bestehend aus:
einem Standort des Fahrzeugs,
einer Route des Fahrzeugs,
historischen Daten des Fahrzeugs, Dienstbenutzers und/oder der Kommunikationsvorrichtung,
statistischen Daten des Fahrzeugs, Dienstbenutzers und/oder der Kommunikationsvorrichtung,
Informationen von dem Fahrzeug, Dienstbenutzer und/oder der Kommunikationsvorrichtung,
Messungen,
Informationen von einem drahtlosen Zugangssystem, und
Informationen von anderen Fahrzeugen und/oder anderen Kommunikationsvorrichtungen.

8. Verfahren (10) nach einem der Ansprüche 1 bis 7, wobei das Verwalten das Begrenzen einer Datenrate eines Dienstes und/oder einer Vorrichtung mit einer niedrigeren Priorität verglichen mit einem Dienst und/oder einer Vorrichtung mit einer höheren Priorität umfasst.

9. Verfahren (10) nach Anspruch 8, wobei das Begrenzen das Begrenzen der Datenrate einer Kommunikationsvorrichtung umfasst.

10. Verfahren (10) nach Anspruch 9, wobei das Begrenzen der Datenrate der Kommunikationsvorrichtung das Begrenzen der Datenrate für eine oder eine Kombination von einer oder mehreren Medienzugriffssteuerungsadressen, einer oder mehreren Internetprotokolladressen und/oder einem oder mehreren Protokollports der Kommunikationsvorrichtung oder ihrer Kommunikationspartner umfasst.

11. Computerprogramm mit einem Programmcode zum Durchführen der Verfahren (10) nach einem der Ansprüche 1 bis 10, wenn das Computerprogramm auf einem Computer, einem Prozessor oder einer programmierbaren Hardwarekomponente ausgeführt wird.

12. Vorrichtung (20) für ein Fahrzeug (200), umfassend eine Steuereinheit (24) konfiguriert zum Durchführen eines der Verfahren (10) nach einem der Ansprüche 1 bis 10.

13. Fahrzeug (200), umfassend die Vorrichtung (20) nach Anspruch 12.

## Revendications

1. Procédé (10) pour commander l'accès sans fil d'une pluralité de dispositifs de communication dans un véhicule (200), le procédé comprenant :
la détermination (12) d'informations sur une demande future prédite de ressources de communication sans fil de la pluralité de dispositifs de communication ;
la détermination (14) d'informations sur une disponibilité future prédite de ressources de communication sans fil dans le véhicule ; et
la gestion (16) des ressources de communication sans fil pour la pluralité de dispositifs de communication dans le véhicule sur la base des informations sur la demande future prédite et sur la base des informations sur la disponibilité future prédite,
dans lequel la gestion comprend en outre l'attribution de différentes bandes radio aux dispositifs de communication,
dans lequel la gestion comprend en outre la détermination de priorités de dispositif pour les dispositifs de communication,
**caractérisé en ce que** la gestion des ressources de communication sans fil pour la pluralité de dispositifs de communication dans le véhicule comprend en outre l'invitation d'un sous-ensemble de la pluralité de dispositifs de communication ayant une priorité de dispositif inférieure à passer d'une première bande radio à une deuxième bande radio ; et
si un dispositif dudit sous-ensemble de la pluralité de dispositifs de communication ne passe pas à la deuxième bande radio dans un délai de grâce après l'invitation : inscription dudit dispositif sur une liste noire pour l'accès à la première bande radio.

2. Procédé (10) selon la revendication 1, dans lequel la gestion comprend l'attribution de différentes technologies d'accès radio aux dispositifs de communication.

3. Procédé (10) selon l'une des revendications 1 ou 2, dans lequel la gestion comprend la détermination de priorités de service pour des services des dispositifs de communication.

4. Procédé (10) selon la revendication 3, dans lequel les priorités de service comprennent au moins une priorité inférieure pour un service de divertissement et au moins une priorité supérieure pour un service pertinent pour le conducteur et/ou dans lequel les priorités de dispositif comprennent au moins une priorité inférieure pour un dispositif fournissant un service de divertissement et au moins une priorité supérieure pour un dispositif fournissant un service pertinent pour le conducteur.

5. Procédé (10) selon l'une des revendications 3 ou 4, dans lequel la gestion comprend l'utilisation d'une technologie d'accès radio dédiée pour un service avec une priorité supérieure et d'une ou plusieurs autres technologies d'accès radio pour un service avec une priorité inférieure.

6. Procédé (10) selon l'une des revendications 1 à 5, dans lequel la détermination des informations sur la demande future prédite comprend la prédiction d'une demande future de ressources radio d'un service sur la base d'un ou plusieurs éléments du groupe constitué de :
une localisation du véhicule,
des données historiques du véhicule, de l'utilisateur de service et/ou du dispositif de communication,
des données statistiques du véhicule, de l'utilisateur de service et/ou du dispositif de communication,
des informations provenant du véhicule, de l'utilisateur de service et/ou du dispositif de communication,
des mesures, et
des informations provenant d'autres véhicules et/ou d'autres dispositifs de communication.

7. Procédé (10) selon l'une des revendications 1 à 6, dans lequel la détermination des informations sur la disponibilité future prédite de ressources de communication sans fil comprend la prédiction d'une disponibilité future de ressources radio sur la base d'un ou plusieurs éléments du groupe constitué de :
une localisation du véhicule,
un itinéraire du véhicule,
des données historiques du véhicule, de l'utilisateur de service et/ou du dispositif de communication,
des données statistiques du véhicule, de l'utilisateur de service et/ou du dispositif de communication,
des informations provenant du véhicule, de l'utilisateur de service et/ou du dispositif de communication,
des mesures,
des informations provenant d'un système d'accès sans fil, et
des informations provenant d'autres véhicules et/ou d'autres dispositifs de communication.

8. Procédé (10) selon l'une des revendications 1 à 7, dans lequel la gestion comprend la limitation d'un débit de données d'un service et/ou d'un dispositif avec une priorité inférieure par rapport à un service et/ou à un dispositif avec une priorité supérieure.

9. Procédé (10) selon la revendication 8, dans lequel la limitation comprend la limitation du débit de données d'un dispositif de communication.

10. Procédé (10) selon la revendication 9, dans lequel la limitation du débit de données du dispositif de communication comprend la limitation du débit de données pour l'une ou une combinaison d'une ou plusieurs adresses de commande d'accès au support, d'une ou plusieurs adresses de protocole internet et/ou d'un ou plusieurs ports de protocole du dispositif de communication ou de ses partenaires de communication.

11. Programme informatique comportant un code de programme pour effectuer les procédés (10) selon l'une quelconque des revendications 1 à 10, lorsque le programme informatique est exécuté sur un ordinateur, un processeur ou un composant matériel programmable.

12. Appareil (20) pour un véhicule (200), comprenant une unité de commande (24) configurée pour effectuer l'un des procédés (10) selon l'une des revendications 1 à 10.

13. Véhicule (200) comprenant l'appareil (20) selon la revendication 12.
